# EUROPEAN PATENT SPECIFICATION

(11) **EP 4 088 858 B1**
(45) Date of publication and mention of the grant of the patent: **04.12.2024**
(21) Application number: 21861923.7
(22) Date of filing: 05.08.2021
(51) Int. Cl.: B23K 37/04, B23K 11/11, B23K 37/00, B23K 11/00, B23K 11/02, B23K 11/34, B23K 11/36, B23K 101/36, B23K 101/38

(54) **APPARATUS AND METHOD FOR WELDING**
SCHWEISSVORRICHTUNG UND SCHWEISSVERFAHREN
APPAREIL ET PROCÉDÉ DE SOUDAGE

(30) Priority: 24.08.2020 KR 20200106094
(43) Date of publication of application: 16.11.2022
(73) Proprietor: LG Energy Solution, Ltd., Seoul 07335 (KR)
(72) Inventor: LEE, Myung An, Daejeon 34122 (KR); RYU, Duk Hyun, Daejeon 34122 (KR)
(74) Representative: Goddar, Heinz J.
(86) International application number: PCT/KR2021/010347
(87) International publication number: WO 2022/045626

(56) References cited:
- JP-A- 2001 096 370
- JP-A- 2004 535 302
- JP-A- 2006 509 630
- KR-A- 20150 006 676
- US-A- 6 084 195
- No further relevant documents disclosed

## Description

The present invention relates to an apparatus and method for welding, and more particularly, to a welding apparatus and welding method, manufacturing a secondary battery.

### [BACKGROUND ART]

As the demands for portable electronic products such as notebooks, video cameras and cellular phones are rapidly increased in these days, and development of electric vehicles, energy storage batteries, robots, satellites, etc. is under active progress, numerous studies are being made on secondary batteries being used as the driving power source.

The electrode assembly mounted in the battery case is a power generating element, having a cathode/separator/anode stack structure, which can be charged and discharged, and the electrode assembly is classified into a jelly-roll type, a stacked type and a stacked/folded type. The jelly-roll type electrode assembly is configured to have a structure in which a long sheet type cathode and a long sheet type anode, to which active materials are applied, are wound in a state where a separator is interposed between the cathode and the anode, the stacked type electrode assembly is configured to have a structure in which a large number of cathodes having a predetermined size and a large number of anodes having a predetermined size are sequentially stacked in a state in which separators are interposed between the cathodes and the anodes, and the stacked/folded type electrode assembly is a combination of the jelly-roll type electrode assembly and the stacked type electrode assembly. Among them, the jelly-roll type electrode assembly has advantages in that manufacturing is easy and an energy density per unit weight is high.

Based on the shape of a battery case, a secondary battery is classified into a cylindrical battery where an electrode assembly is mounted in a cylindrical metal can, a prismatic battery where an electrode assembly is mounted in a prismatic metal can, and a pouch-shaped battery where an electrode assembly is mounted in a pouch-shaped case formed of an aluminum laminate sheet.

When manufacturing such various types of secondary batteries, parts may be combined using a welding apparatus. In a conventional welding apparatus, a welding rod is exposed to the outside and heat generated during welding is not controlled, so the welding rod is prepared in an overheated state before the progress of a next welding. Thus, there is a possibility that the electrode or separator of the welding part may be damaged.

In addition, in the conventional welding apparatus, the upper welding rod is not provided with a temperature measuring mechanism, and resistance fluctuates when the temperature of the welding rod changes, which makes it difficult to apply a uniform current. Even if the temperature is measured, the movement speed of the equipment is fast and the outer diameter of the welding rod is relatively small, which caused a problem that it was difficult to measure the temperature of the upper welding rod.

JP 2001 096370 A (disclosing the preamble of claims 1 and 7) describes an extremely small wire in a resistance welding apparatus which performs a thermocompression bonding or a spot welding.

US 6,084,195 A relates to a system and method for monitoring alignment, pressure, and temperature of electrodes of a welder.

### [DETAILED DESCRIPTION OF THE INVENTION]

### [Technical Problem]

It is an object of the present invention to provide a welding apparatus and a welding method that manage a heat of welding rods generated when welding secondary batteries and minimize welding defects.

### [Technical Solution]

In order to achieve the above object, according to a first aspect of the present invention, there is provided a welding apparatus as defined in claim 1, comprising: a welding rod; a temperature measuring jig section that measures the temperature of the welding rod; and a welding rod cooler section that cools the welding rod.

The temperature measuring jig section includes a main body portion; a temperature sensor positioned at the upper end of the main body portion; and a rotating shaft portion that rotates the main body portion to position the temperature sensor at the lower end part of the welding rod.

The rotating shaft portion may be formed on the main body portion, and rotate the main body portion in a horizontal direction around the rotating shaft portion.

The rotating shaft portion may rotate the main body portion between 0 degrees and 90 degrees.

The welding rod is formed of an upper welding rod and a lower welding rod, and the temperature sensor may come into close contact with the lower end of the upper welding rod through rotation to measure the temperature of the upper welding rod.

The welding rod cooler section includes a cooling panel; and a plurality of cooling holes formed in the cooling panel, wherein the cooling hole is connected to a blower, and a cold air flowing-in through the blower may passe through the cooling hole to be blown to the welding rod.

The cooling panel is formed in a shape curved toward the lower end part of the upper welding rod, so that the cold air may be blown to the lower end of the upper welding rod.

The plurality of cooling holes may be formed into 5 or less.

In order to achieve the above object, according to a second aspect of the present invention, there is provided a welding method as defined in claim 7, comprising: a step in which a temperature measuring jig section comes into close contact with the lower end of an upper welding rod to measure the temperature of the lower end of the upper welding rod; a step in which the temperature measuring jig section is detached from the lower end of the upper welding rod through rotation; a step in which the upper welding rod is moved in a direction in which the lower welding rod is positioned to perform a welding process; a step in which the upper welding rod is returned to the upper side after the welding process has been completed; and a step in which the temperature measuring jig section comes into close contact with the lower end of the upper welding rod through rotation to measure the temperature of the lower end of the upper welding rod again.

The welding method further includes a step in which the welding rod cooler section cools the lower end part of the upper welding rod.

Further preferred embodiments of the present invention are defined in the dependent claims.

### [BRIEF DESCRIPTION OF THE DRAWINGS]

Fig. 1 is a diagram showing a welding apparatus according to one embodiment of the present disclosure;
Fig. 2 is a diagram showing a state in which the temperature measuring jig section according to one embodiment of the present disclosure enters the lower end of the upper welding rod where welding has been completed, and measures the temperature of the upper welding rod;
Fig. 3 is a diagram showing a state in which the temperature measurement jig section according to one embodiment of the present disclosure completes the temperature measurement and detaches the lower end part of the upper welding rod, and then the upper welding rod proceeds the welding again.

### [DETAILED DESCRIPTION OF THE EMBODIMENTS]

It should be appreciated that the exemplary embodiments, which will be described below, are illustratively described to assist in the understand the present disclosure, and the present disclosure can be variously modified to be carried out differently from the exemplary embodiments described herein. However, in the description of the present disclosure, the specific descriptions and illustrations of publicly known functions or constituent elements will be omitted when it is determined that the specific descriptions and illustrations may unnecessarily obscure the subject matter of the present disclosure. In addition, in order to help understand the present disclosure, the accompanying drawings are not illustrated based on actual scales, but parts of the constituent elements may be exaggerated in size.

As used herein, terms such as first, second, and the like may be used to describe various components, and the components are not limited by the terms. The terms are used only to discriminate one component from another component.

Further, the terms used herein are used only to describe specific exemplary embodiments, and are not intended to limit the scope of the present disclosure. A singular expression includes a plural expression unless they have definitely opposite meanings in the context. It should be understood that the terms "comprise", "include", and "have" as used herein are intended to designate the presence of stated features, numbers, steps, movements, constitutional elements, parts or combinations thereof, but it should be understood that they do not preclude a possibility of existence or addition of one or more other features, numbers, steps, movements, constitutional elements, parts or combinations thereof.

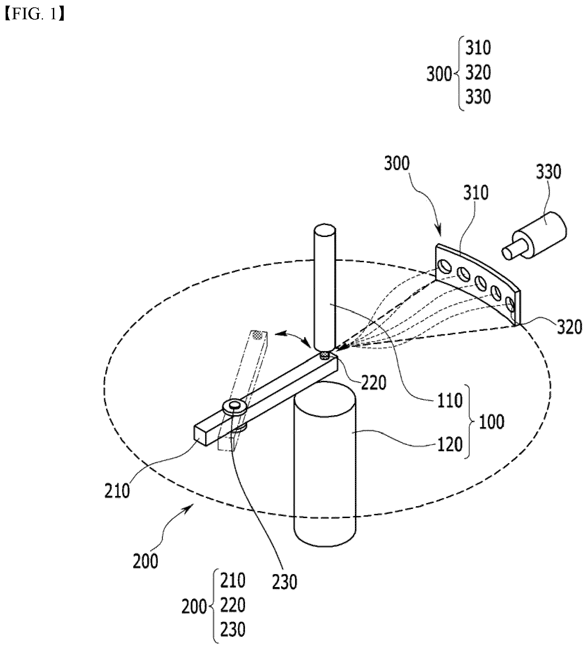

Below, the structure of a welding apparatus according to one embodiment of the present disclosure will be described with reference to Fig. 1.

Fig. 1 is a diagram showing a welding apparatus according to one embodiment of the present disclosure.

Referring to Fig. 1, the welding apparatus according to the present embodiment includes a welding rod 100, a temperature measuring jig section that measures the temperature of the welding rod 100, and a welding rod cooler section 300 that cools the welding rod 100. The welding rod 100 includes an upper welding rod 110 and a lower welding rod 120, and a welding process can be performed between the upper welding rod 110 and the lower welding rod 120. The welding rod 100 described later may refer to the upper welding rod 110.

The temperature measuring jig section 200 includes a main body portion 210 formed in a bar shape, a temperature sensor 220 that is positioned at the upper end of the main body portion 210, and a rotating shaft portion 230 that rotates the main body portion 210 to position the temperature sensor 220 at the lower end of the welding rod 100. The temperature of the lower end of the welding rod 100 can be measured through the temperature sensor 220 positioned in the temperature measuring jig section 200.

The conventional welding apparatus was not provided with a temperature sensor, so there was a problem that resistance fluctuates when the temperature of the welding rod changes, which makes it difficult to apply a uniform current to the welding rod. Further, even if the temperature sensor is provided, there was a problem that the outer diameter of the upper welding rod is relatively smaller than that of the lower welding rod, and thus it is difficult to accurately measure the temperature of the lower end part of the upper welding rod. Further, the production speed can be increased by using a plurality of welding rods in a general battery production process, but it was necessary to maintain a uniform temperature of the plurality of welding rods and realize uniform welding quality for each welding section.

On the other hand, according to the present embodiment, the temperature of the lower end part of the welding rod 100 is measured by using the temperature sensor 220 positioned at the upper end of the main body 210, and the temperature of the welding rod is adjusted through the measured temperature, thereby capable of ensuring the uniformity of welding quality welding.

According to the present embodiment, the welding rod cooler section 300 includes a cooling panel 310 and a plurality of cooling holes 320 formed in the cooling panel 310, and a blower 330, and the cooling holes 320 is connected to a blower 330, and the cold air flowing-in through the blower 330 passes through the cooling holes 320 to be blown to the lower end of the welding rod 100.

In the conventional welding apparatus, a separate cooling means for the welding rod was not existed, and an air conditioner type blower was used, but in the case of an air conditioner type blower, there was a problem in that it was difficult to intensively cool at a desired position. Further, since the welding cycle is repeated rapidly in the battery production process, rapid cooling of the welding rod was sometimes required. According to this embodiment, the welding cycle can be proceeded at a speed at which one cycle circulates within one second.

In this regard, according to the present embodiment, a plurality of cooling holes 320 formed in the cooling panel 310 formed so as to have a curvature toward the lower end of the welding rod 100 are connected to the blower 330, and the cold air flowing-in through the blower 330 passes through the cooling hole 320 formed toward the lower end of the welding rod 100 and is intensively blown to the lower end part of the welding rod where heat generation is relatively intense, thereby rapidly cooling the welding rod and improving the welding efficiency.

Below, the operation of the temperature measuring jig section and the welding rod cooler section according to the present disclosure will be described with reference to Figs. 1 to 3.

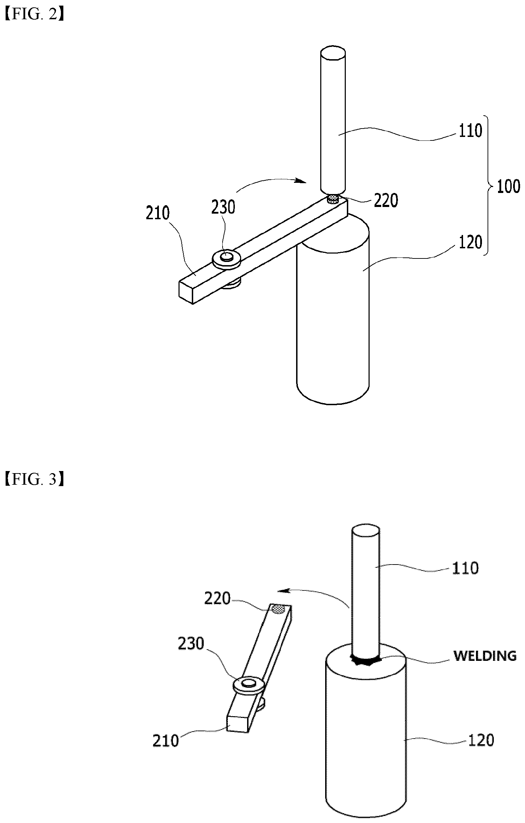

Fig. 2 is a diagram showing a state in which the temperature measuring jig section according to the present disclosure enters the lower end of the upper welding rod where welding has been completed, and measures the temperature of the upper welding rod. Fig. 3 is a diagram showing a state in which the temperature measurement jig section according to one embodiment of the present disclosure completes the temperature measurement and detaches the lower end part of the upper welding rod, and then the upper welding rod proceeds the welding again.

Referring to Figs. 2 and 3, in the temperature measuring jig section 200 according to the present embodiment, the rotating shaft portion 230 is formed on the main body portion 210 and can rotate the main body portion 210 in a horizontal direction around the rotating shaft portion 230. The rotating shaft portion 230 may be fixed to a specific position outside the welding apparatus. At this time, the rotating shaft portion 230 can rotate the main body portion 210 between 0 degrees and 90 degrees. When the rotation of the main body portion 210 exceeds 90 degrees, the main body portion 210, which was spaced apart, requires a relatively large amount of power to return to the lower end part of the upper welding rod for temperature measurement, and therefore, the rotation angle of the main body portion 210 is preferably formed within 90 degrees. Further, when temperature measurement is not performed, it is preferable that the rotation angle of the main body portion 210 is rotated at an angle that can be spaced apart from the welding rod 100 at least to thereby maintain an angle at which the main body portion 210 and the temperature measuring jig section 200 are positioned so as to be spaced apart from each other.

A temperature sensor 220 is mounted on the upper surface of the end of the main body portion 210, and the temperature sensor 220 can come into close contact with the lower end part of the welding rod 100 through rotation to measure the temperature of the welding rod 100.

Therefore, when the welding rod 100 performs welding, the end part of the main body portion 210 around the rotating shaft 230 is positioned at a position spaced apart from the lower end part of the welding rod 100. When the upper welding rod 110 is spaced apart from the lower welding rod 120 after welding has been completed, as shown in Fig. 2, the temperature sensor 220 mounted on the end part of the main body portion may be positioned at the lower end part of the upper welding rod 110 by rotating the main body portion 210 around the rotating shaft 230. Further, after the temperature measurement has been completed through the temperature sensor 220, as shown in Fig. 3, the main body portion 210 is rotated in the outer direction of the welding rod around the rotating shaft portion 230 again, so that the main body portion 210 is positioned at a position spaced apart from the welding rod 100. The above-described rotating step of the main body portion 210 may be repeatedly performed in proportion to the number of repeated welding progress.

At this time, the temperature sensor 220 may be positioned so as to be in contact with the lower end part of the upper welding rod 110. Therefore, the rotating shaft part 230 and the main body portion 210 may be positioned on the same horizontal plane as the portion where the lower end part of the upper welding rod 110 is positioned when welding is not performed.

According to the present embodiment, the rotation of the main body portion 210 via the rotation shaft portion 230 rotates in a direction perpendicular to the longitudinal direction of the welding rod 100, so that the interference between the welding rod 100 and the temperature measuring jig section 200 can be minimized.

The cooling panel 310 constituting the welding rod cooler section 300 may be formed in a shape curved toward the lower end part of the welding rod 100. The cooling panel 310 may be formed so as to have a constant radius of curvature R. At this time, the radius of curvature (R) can be adjusted according to the type of the welding rod to adjust the curved angle of the cooling panel 310. Through this, the curved angle of the cooling panel 310 can be adjusted to suit the types of welding rods having various sizes and shapes, so that the cool air guided from the cooling hole 320 formed on the curved surface of the cooling panel 310 may be intensively blown to the portion where heat generation is intense.

According to the present embodiment, the plurality of cooling holes 320 may be formed into 5 or less. When the number of cooling holes 320 formed in the cooling panel 310 exceeds 5, interference between cold airs blown through the cooling hole 320 occurs, and cooling of the lower end part of the welding rod 100 cannot be performed properly. Thus, the number of the cooling holes 320 is preferably formed to be 5 or less.

Below, a welding method according to one embodiment of the present disclosure will be described with reference to Figs. 1 to 3.

Referring to Figs. 2 and 3, in the welding method according to this embodiment, a step in which a temperature measuring jig section 200 comes into close contact with the lower end of an upper welding rod 110 to measure the temperature of the lower end of the upper welding rod 110, a step in which the temperature measuring jig section 200 is detached from the lower end of the upper welding rod 110 through rotation, a step in which the upper welding rod 110 is moved in a direction in which the lower welding rod 120 is positioned to perform a welding process, a step in which the upper welding rod 110 is returned to the upper side after the welding process has been completed; and a step in which the temperature measuring jig section 200 comes into close contact with the lower end of the upper welding rod 110 through rotation to measure the temperature of the lower end of the upper welding rod 110 again, can be sequentially carried out.

As described above, the temperature sensor 220 is periodically positioned at the lower end part of the upper welding rod 110 via the repeated rotational movement of the main body portion 210, whereby the temperature at the lower end part of the upper welding rod, which can change between repeated welding processes, can be repeatedly measured, so that the temperature of the welding rod can be controlled more precisely, and the welding quality can be improved.

According to the present embodiment, in each step of the above-described welding method, a step in which the welding rod cooler section 300 cools the lower end part of the upper welding rod 110 can be further included. Therefore, the welding process cycle is repeatedly performed, and thus the temperature measurement associated therewith s periodically performed. At the same time, the lower end part of the upper welding rod 110 is continuously cooled through the welding rod cooler section 300, thereby improving overall welding quality.

Although the present invention has been shown and described with reference to preferred embodiments, the scope of the present invention is not limited thereto, and numerous other modifications and embodiments can be devised by those skilled in the art, without deviating from the scope of the present invention as defined in the appended claims.

### [Description of Reference Numerals]

| | | | |
|---|---|---|---|
| 100: | welding rod | 110: | upper welding rod (welding rod) |
| 120: | lower welding rod | 200: | temperature measuring jig section |
| 210: | main body portion | 220: | temperature sensor |
| 230: | rotating shaft portion | 300: | welding rod cooler section |
| 310: | cooling panel | 320: | cooling hole |
| 330: | blower | | |

## Claims

1. A welding apparatus comprising:
a welding rod (100);
a welding rod cooler section (300) that cools the welding rod;
the welding apparatus being **characterised by** the following:
a temperature measuring jig section (200) that measures the temperature of the welding rod (100); and
wherein:
the temperature measuring jig section (200) comprises
a main body portion (210);
a temperature sensor (220) positioned at the upper end of the main body portion (210); and
a rotating shaft portion (230) that rotates the main body portion (210) to position the temperature sensor (220) at the lower end part of the welding rod (100), and
the welding rod cooler section (300) comprises
a cooling panel (310); and
a plurality of cooling holes (320) formed in the cooling panel (310),
a blower (330),
wherein the cooling holes (320) are connected to the blower (330), and a cold air flowing-in through the blower (330) passes through the cooling hole (320) to be blown to the welding rod (100).

2. The welding apparatus of claim 1, wherein:
the rotating shaft portion (230) is formed on the main body portion (210), and rotates the main body portion (210) in a horizontal direction around the rotating shaft portion (230).

3. The welding apparatus of claim 2, wherein:
the rotating shaft portion (230) rotates the main body portion (210) between 0 degrees and 90 degrees.

4. The welding apparatus of one of the preceding claims, wherein:
the welding rod (100) is formed of an upper welding rod (110) and a lower welding rod (120), and
the temperature sensor (220) comes into close contact with the lower end of the upper welding rod (110) through rotation to measure the temperature of the upper welding rod (110).

5. The welding apparatus of one of the preceding claims, wherein:
the welding rod (100) is formed of an upper welding rod (110) and a lower welding rod (120), and
the cooling panel (310) is formed in a shape curved toward the lower end part of the upper welding rod (110), so that the cold air is blown to the lower end of the upper welding rod (110).

6. The welding apparatus of one of the preceding claims, wherein:
the plurality of cooling holes (320) are formed into 5 or less.

7. A welding method being **characterised by** the following:
a step in which a temperature measuring jig section (200) comes into close contact with the lower end of an upper welding rod (110) to measure the temperature of the lower end of the upper welding rod (110);
a step in which the temperature measuring jig section (200) is detached from the lower end of the upper welding rod (110) through rotation;
a step in which the upper welding rod (110) is moved in a direction in which the lower welding rod (120) is positioned to perform a welding process;
a step in which the upper welding rod (110) is returned to the upper side after the welding process been completed; and
a step in which the temperature measuring jig section (200) comes into close contact with the lower end of the upper welding rod (110) through rotation to measure the temperature of the lower end of the upper welding rod (110) again, and
a step in which the welding rod cooler section (300) cools the lower end part of the upper welding rod (110), wherein the temperature measuring jig section (200) comprises
a main body portion (210);
a temperature sensor (220) positioned at the upper end of the main body portion (210); and
a rotating shaft portion (230) that rotates the main body portion (210) to position the temperature sensor (220) at the lower end part of the welding rod (100), and
welding rod cooler section (300) is provided with
a cooling panel; and
a plurality of cooling holes (320) formed in the cooling panel,
a blower (330),
wherein the cooling holes (320) are connected to the blower (330), and a cold air flowing-in through the blower (330) passes through the cooling hole (320) to be blown to the welding rod (100).

## Patentansprüche

1. Schweißvorrichtung aufweisend:
einen Schweißstab (100);
einen Schweißstabkühlabschnitt (300), der den Schweißstab kühlt;
wobei die Schweißvorrichtung **gekennzeichnet ist durch**:
einen Temperaturmesseinspannabschnitt (200), der die Temperatur des Schweißstabs (100) misst; und
wobei:
der Temperaturmesseinspannabschnitt (200) aufweist:
einen Hauptkörperabschnitt (210);
einen Temperatursensor (220), der am oberen Ende des Hauptkörperabschnitts (210) positioniert ist; und
einen Drehwellenabschnitt (230), der den Hauptkörperabschnitt (210) dreht, um den Temperatursensor (220) am unteren Endteil des Schweißstabs (100) zu positionieren, und
der Schweißstabkühlabschnitt (300) aufweist:
eine Kühlplatte (310); und
mehrere Kühllöchern (320), die in der Kühlplatte (310) ausgebildet sind,
ein Gebläse (330),
wobei die Kühllöcher (320) mit dem Gebläse (330) verbunden sind und eine Kaltluft, die **durch** das Gebläse (330) einströmt, **durch** die Kühllöcher (320) strömt, um zu dem Schweißstab (100) geblasen zu werden.

2. Schweißvorrichtung nach Anspruch 1, wobei:
der Drehwellenabschnitt (230) an dem Hauptkörperabschnitt (210) ausgebildet ist und den Hauptkörperabschnitt (210) in einer horizontalen Richtung um den Drehwellenabschnitt (230) dreht.

3. Schweißvorrichtung nach Anspruch 2, wobei:
der Drehwellenabschnitt (230) den Hauptkörperabschnitt (210) zwischen 0 Grad und 90 Grad dreht.

4. Schweißvorrichtung nach einem der vorhergehenden Ansprüche, wobei:
der Schweißstab (100) aus einem oberen Schweißstab (110) und einem unteren Schweißstab (120) gebildet ist, und
der Temperatursensor (220) durch Drehung in engen Kontakt mit dem unteren Ende des oberen Schweißstabs (110) kommt, um die Temperatur des oberen Schweißstabs (110) zu messen.

5. Schweißvorrichtung nach einem der vorhergehenden Ansprüche, wobei:
der Schweißstab (100) aus einem oberen Schweißstab (110) und einem unteren Schweißstab (120) gebildet ist, und
die Kühlplatte (310) in einer Form ausgebildet ist, die zu dem unteren Endteil des oberen Schweißstabs (110) hin gekrümmt ist, so dass die Kaltluft zu dem unteren Ende des oberen Schweißstabs (110) geblasen wird.

6. Schweißvorrichtung nach einem der vorhergehenden Ansprüche, wobei:
die mehreren Kühllöcher (320) zu 5 oder weniger ausgebildet sind.

7. Schweißverfahren, **gekennzeichnet durch**:
einen Schritt, in dem ein Temperaturmesseinspannabschnitt (200) in engen Kontakt mit dem unteren Ende eines oberen Schweißstabs (110) kommt, um die Temperatur des unteren Endes des oberen Schweißstabs (110) zu messen;
einen Schritt, in dem der Temperaturmesseinspannabschnitt (200) durch Drehung vom unteren Ende des oberen Schweißstabs (110) gelöst wird;
einen Schritt, in dem der obere Schweißstab (110) in eine Richtung bewegt wird, in der der untere Schweißstab (120) positioniert ist, um einen Schweißprozess durchzuführen;
einen Schritt, in dem der obere Schweißstab (110) zur Oberseite zurückgeführt wird, nachdem der Schweißprozess abgeschlossen ist; und
einen Schritt, in dem der Temperaturmesseinspannabschnitt (200) durch Drehung in engen Kontakt mit dem unteren Ende des oberen Schweißstabs (110) kommt, um die Temperatur des unteren Endes des oberen Schweißstabs (110) erneut zu messen, und
einen Schritt, in dem der Schweißstabkühlabschnitt (300) den unteren Endteil des oberen Schweißstabs (110) kühlt, wobei der Temperaturmesseinspannabschnitt (200) aufweist:
einen Hauptkörperabschnitt (210);
einen Temperatursensor (220), der am oberen Ende des Hauptkörperabschnitts (210) positioniert ist; und
einen Drehwellenabschnitt (230), der den Hauptkörperabschnitt (210) dreht, um den Temperatursensor (220) am unteren Endteil des Schweißstabs (100) zu positionieren, und
wobei der Schweißstabkühlabschnitt (300) bereitgestellt ist mit:
einer Kühlplatte; und
mehreren Kühllöchern (320), die in der Kühlplatte ausgebildet sind,
einem Gebläse (330),
wobei die Kühllöcher (320) mit dem Gebläse (330) verbunden sind und eine Kaltluft, die durch das Gebläse (330) einströmt, durch die Kühllöcher (320) strömt, um zu dem Schweißstab (100) geblasen zu werden.

## Revendications

1. Appareil de soudage comprenant :
une baguette de soudage (100) ;
une section de refroidisseur de baguette de soudage (300) refroidissant la baguette de soudage ;
l'appareil de soudage étant **caractérisé par** :
une section de gabarit de mesure la température (200) mesurant la température de la baguette de soudage (100) ; et
la section de gabarit de mesure la température (200) comprenant :
une partie de corps principal (210) ;
un capteur de température (220) positionné à l'extrémité supérieure de la partie de corps principal (210) ; et
une partie d'arbre rotatif (230) effectuant la rotation de la partie de corps principal (210) afin de positionner le capteur de température (220) sur la partie de l'extrémité inférieure de la baguette de soudage (100), et
la section de refroidisseur de baguette de soudage (300) comprenant
un panneau de refroidissement (310) ; et
une pluralité d'orifices de refroidissement (320) réalisés dans le panneau de refroidissement (310),
une soufflante (330),
les orifices de refroidissement (320) étant raccordés à la soufflante (330), et un air froid s'écoulant à travers la soufflante (330) traversant l'orifice de refroidissement (320) pour être soufflé vers la baguette de soudage (100).

2. Appareil de soudage selon la revendication 1, dans lequel :
la partie d'arbre rotatif (230) étant formée sur la partie de corps principal (210), et faisant tourner la partie de corps principal (210) dans une direction horizontale autour de la partie d'arbre rotatif (230).

3. Appareil de soudage selon la revendication 2,
la partie d'arbre rotatif (230) faisant tourner la partie de corps principal (210) entre 0 degré et 90 degrés.

4. Appareil de soudage selon une quelconque des revendications précédentes,
la baguette de soudage (100) étant composée d'une baguette de soudage supérieure (110) et d'une baguette de soudage inférieure (120), et
le capteur de température (220) entrant en contact étroit avec l'extrémité inférieure de la baguette de soudage supérieure (110) par rotation pour mesurer la température de la baguette de soudage supérieure (110).

5. Appareil de soudage selon une quelconque des revendications précédentes,
la baguette de soudage (100) étant composée d'une baguette de soudage supérieure (110) et d'une baguette de soudage inférieure (120), et
le panneau de refroidissement (310) étant formé avec une forme arrondie vers l'extrémité inférieure faisant partie de la baguette de soudage supérieure (110), de sorte que l'air froid soit soufflé vers l'extrémité inférieure de la baguette de soudage supérieure (110).

6. Appareil de soudage selon une quelconque des revendications précédentes,
la pluralité d'orifices de refroidissement (320) en comprenant 5 ou moins.

7. Procédé de soudage **caractérisé par** les opérations suivantes :
une étape au cours de laquelle la section de gabarit de mesure la température (200) entre en contact étroit avec l'extrémité inférieure d'une baguette de soudage supérieure (110) pour mesurer la température de la baguette de soudage supérieure (110) ;
une étape au cours de laquelle la section de gabarit de mesure la température (200) est détachée de l'extrémité inférieure de la baguette de soudage supérieure (110) par rotation ;
une étape au cours de laquelle la baguette de soudage supérieure (110) est déplacée dans une direction dans laquelle la baguette de soudage inférieure (120) est positionnée pour effectuer un procédé de soudage ;
une étape au cours de laquelle la baguette de soudage supérieure (110) est ramenée vers le côté supérieur après l'achèvement du procédé de soudage ; et
une étape au cours de laquelle la section de gabarit de mesure la température (200) entre en contact étroit avec l'extrémité inférieure de la baguette de soudage supérieure (110) par rotation pour mesurer de nouveau la température de l'extrémité inférieure de la baguette de soudage supérieure (110), et
une étape au cours de laquelle la section de refroidisseur de baguette de soudage (300) refroidit l'extrémité inférieure de la baguette de soudage supérieure (110), la section de gabarit de mesure la température (200) comprenant :
une partie de corps principal (210) ;
un capteur de température (220) positionné à l'extrémité supérieure de la partie de corps principal (210) ; et
une partie d'arbre rotatif (230) effectuant la rotation de la partie de corps principal (210) afin de positionner le capteur de température (220) sur la partie de l'extrémité inférieure de la baguette de soudage (100), et
la section de refroidisseur de baguette de soudage (300) étant dotée d'un panneau de refroidissement ; et
d'une pluralité d'orifices de refroidissement (320) réalisés dans le panneau de refroidissement,
d'une soufflante (330),
les orifices de refroidissement (320) étant raccordés à la soufflante (330), et un air froid s'écoulant à travers la soufflante (330) traversant l'orifice de refroidissement (320) pour être soufflé sur la baguette de soudage (100).
